# EUROPÄISCHE PATENTANMELDUNG

(11) **EP 3 352 358 A1**
(43) Veröffentlichungstag der Anmeldung: **25.07.2018**
(21) Anmeldenummer: 17152096.8
(22) Anmeldetag: 19.01.2017
(51) Int. Cl.: H02M 1/36, H02M 3/335, H02M 1/00

(54) **VERFAHREN ZUR STEUERUNG EINES SCHALTNETZTEILS**

(71) Anmelder: Siemens Aktiengesellschaft, 80333 München (DE)
(72) Erfinder: Augesky, Christian, 1100 Wien (AT)
(74) Vertreter: Maier, Daniel Oliver

(57) **Zusammenfassung**

Die Erfindung betrifft ein Verfahren zur Steuerung eines Schaltnetzteils (SN), welches zumindest einen Leistungswandler (LW) mit zumindest einem primärseitigen Schaltelement umfasst. Dabei werden zwischen einer Primärseite (P) und einer Sekundärseite (S) des Schaltnetzteils (SN) Energie und Signale übertragen, wobei die Primärseite (P) und die Sekundärseite (S) - neben einer galvanischen Trennung durch den Leistungswandler (LW) - durch einen bidirektionalen Übertrager (UT) getrennt werden. Von einer primärseitigen Steuereinheit (ST1) werden in regelmäßigen, vorgegebenen Zeitabständen Einschaltimpulse generiert (1) und über den bidirektionalen Übertrager (UT) auf die Sekundärseite (S) übertragen (2). Mit Hilfe dieser Einschaltimpulse wird eine Spannung einer sekundärseitigen Hilfsversorgung (HV2) aufgebaut (3), durch welche zumindest eine sekundärseitige Steuereinheit (ST2) mit Energie versorgt wird. Bei Überschreiten eines vorgegebenen Spannungsschwellwerts (Us) durch die Spannung der sekundären Hilfsversorgung (HV2) werden von der sekundären Steuereinheit (ST2) Steuerimpulse abgesetzt (4) und auf der Primärseite (P) von der primärseitigen Steuereinheit (ST1) ausgewertet (5). Primärseitig werden dann diese Steuerimpulse als Basis für Ansteuersignale insbesondere für ein Schalten des zumindest einen primärseitigen Schaltelements des Leistungswandlers (LW) herangezogen (6).

## Beschreibung

Die gegenständliche Erfindung betrifft allgemein das Gebiet der Elektrotechnik, insbesondere den Bereich der Leistungselektronik sowie leistungselektronischer Schaltungen zur Stromversorgung. Im Speziellen bezieht sich die vorliegende Erfindung auf ein Verfahren zur Steuerung eines Schaltnetzteils, welches zumindest einen Leistungswandler mit Primärseite und Sekundärseite und mit zumindest einem primärseitigen Schaltelement umfasst. Zwischen der Primärseite und Sekundärseite des Schaltnetzteils werden Energie und Signale, insbesondere Steuersignale bzw. Steuerimpulse, übertragen.

### Stand der Technik

Schaltnetzteile werden heutzutage in vielen Bereichen verwendet, um Verbraucher an ein Stromnetz bzw. eine Stromquelle anzubinden und mit einer meist konstanten und häufig vorgebbaren Spannung zu versorgen. Vom Schaltnetzteil wird eine meist unstabilisierte, aus der Stromquelle bzw. aus dem Stromnetz stammende Gleich- oder Wechselspannung in eine konstante Ausgangsspannung umgewandelt. Für die Umwandlung dieser Gleich- oder Wechselspannung werden üblicherweise Leistungswandler wie z.B. Flusswandler, Sperrwandler oder Resonanzwandler eingesetzt.

Bei vom Stromnetz arbeitenden Schaltnetzteilen ist es häufig erforderlich, dass zwischen einem stromnetzseitigen Eingang des Schaltnetzteils und einem verbraucherseitigen Ausgang des Schaltnetzteils z.B. aus Sicherheitsgründen eine galvanische Trennung vorgesehen ist. Diese galvanische Trennung muss üblicherweise einer durch entsprechende, einschlägige Normen vorgegebenen Prüfspannung von z.B. mehreren Kilo-Volt (kV) standhalten. Üblicherweise ist bei derartigen Schaltnetzteilen die galvanische Trennung im Leistungsteil bzw. beim eingesetzten Leistungswandler - in Form eines Transformators - vorgesehen.

Die Energie bzw. Leistung wird mit Hilfe dieses Transformators im Leistungsteil von einer Primärseite des Schaltnetzteils, welche an das Stromnetz oder die Stromquelle angebunden ist, auf eine Sekundärseite des Schaltnetzteils, an welcher die Ausgangsspannung zur Verfügung gestellt wird, übertragen. Dabei weisen die meisten Schaltnetzteile als getaktete oder geschaltete Stromversorgungen die Eigenschaft auf, dass der von ihnen übertragene Momentanleistungswert direkt vom Taktverhältnis abhängt - d.h. vom Verhältnis einer Ein- und Ausschaltzeit des zumindest einen primärseitig eingesetzten Schaltelements des Leistungswandlers. Dieses zumindest eine primärseitige Schaltelement wird üblicherweise über eine Steuereinheit und/oder von einer entsprechenden Ansteuerung geschaltet. Dazu werden in Schaltnetzteilen für eine interne Versorgung für primärseitige wie sekundärseitige Funktionseinheiten (z.B. primärseitige und/oder sekundärseitige Steuereinheiten, Ansteuerung von Schaltelementen, etc.) so genannte Hilfsversorgungen verwendet, von welchen eine interne Versorgung der gesamten Ansteuerung unter verschiedenen Lastbedingungen (z.B. laufender Betrieb, Stand-by-Modus, Kurzschluss am Ausgang des Schaltnetzteils, Unterspannung am Eingang des Schaltnetzteils, etc.) sichergestellt werden muss.

Um beispielsweise ein von außen bzw. von der Sekundärseite des Schaltnetzteils gesteuertes Ein- und Ausschalten oder im Kurzschlussfall eine entsprechende Strombegrenzung zu ermöglichen, wird üblicherweise ein von der Leistungswandlung unabhängige Hilfsversorgung auf der Sekundärseite benötigt. Diese unabhängige sekundärseitige Hilfsversorgung wird üblicherweise durch einen eigenen Hilfsversorgungswandler realisiert. Durch diesen eigenen Hilfsversorgungswandler kann auch eine stabilisierte primäre Hilfsversorgung zur Verfügung gestellt. Diese Realisierung ist allerdings mit dem Einsatz zusätzlicher Bauteile und mit einer eher komplexen Konstruktion mit entsprechen Platzbedarf sowie mit entsprechenden Kosten verbunden. Ohne derartigen Hilfsversorgungswandler bzw. von der Leistungswandlung unabhängige, sekundärseitige Hilfsversorgung kann es beispielsweise bei Abschaltung von der Sekundärseite bzw. bei einem Kurzschluss oder Überlast zu unerwünschtem funktionalen Verhalten des Schaltnetzteils kommen - wie z.B. zu einem niederfrequentem Pulsen bei Abschaltung von der Sekundärseite aus, zu einem so genannten Hickup-Betrieb bei Kurzschluss, bei welchem das Schaltnetzteil nach kurzen Abschaltintervallen wieder kurz hochfährt.

Weiterhin kann es notwendig sein, die Ausgangsspannung des Schaltnetzteils über Eingriffe (z.B. entsprechende Ansteuerung des oder der primärseitigen Schaltelemente des Leistungswandlers) zu steuern und zu regeln bzw. Ausgangsströme zu begrenzen. Insbesondere zur Gewährleistung der Sicherheit im Fall von Defekten auf der Sekundärseite des Schaltnetzteils sind vielfach zusätzliche Eingriffe über die galvanische Trennstrecke des Schaltnetzteils hinweg notwendig. D.h. neben der Energie für z.B. Hilfsversorgungen müssen auch Steuersignale bzw. Regeleingriffe zwischen der Primärseite und der Sekundärseite des Schaltnetzteils über die galvanische Trennung hinweg übertragen werden können.

Schaltnetzteile mit einer galvanischen Trennung zwischen der Primärseite und der Sekundärseite benötigen daher für eine Übertragung von Steuersignalen bzw. Regeleingriffen ein entsprechendes Übertragungselement. Üblicherweise kommt als Übertragungselement ein Optokoppler zum Einsatz wie z.B. in der Schrift EP 2 709 256 A1 beschrieben. Optokoppler haben allerdings eine begrenzte Bandbreite, welche sich auf die Stabilität der Regelschleife bzw. der Regelung der Ausgangsspannung auswirken kann. Weiterhin weisen Optokoppler eine relativ hohe Toleranz bei einem Stromübertragungsverhältnis auf, wobei es beispielsweise aufgrund von Alterung, Temperaturänderungen, etc. zu Veränderungen im Stromübertragungsverhältnis bzw. in der Stromverstärkung des Optokopplers und damit zu Instabilitäten in der Regelung des Schaltnetzteils kommen kann. Da Optokoppler in ihrem Verhalten meist nicht eigensicher sind - d.h. es können im Fehlerfall unsichere Zustände auftreten wie z.B. es kann sowohl zum Unterbrechen als auch zum Kurzschließen kommen, muss praktisch üblicherweise ein zweiter Optokoppler eingesetzt werden, um die Eigensicherheit des Schaltnetzteils herzustellen. Dies ist ebenfalls mit dem Einsatz von zusätzlichen Bauteilen sowie zusätzlichen Kosten verbunden.

Weiterhin kann es bei speziellen Schaltungslösungen für Schaltnetzteile (z.B. bei Einsatz eines Resonanzwandlers oder bei vorgegebenen Abmagnetisierungsbedingungen von Fluss- oder Sperrwandlern) notwendig sein, einen exakten Schaltzeitpunkt für das primärseitige Schaltelement oder die primärseitigen Schaltelemente an eine Steuereinheit und/oder Ansteuerung auf der Primärseite zu übermitteln. Die Ermittlung der Schaltbedingungen kann bei diesen speziellen Schaltungslösungen beispielsweise von der Primärseite - meist mit Einschränkungen - realisiert werden. Alternativ kann die Ermittlung der Schaltbedingungen sekundärseitig erfolgen, wobei die ermittelten Schaltbedingungen dann z.B. durch kleine Pulsübertrager auf die Primärseite übertragen werden. Diese Übertragung erfolgt dann üblicherweise zusätzlich zu der Übertragung von Steuersignalen bzw. Regeleingriffen und kann damit weitere Bauteile (z.B. kleine Pulsübertrager) im Schaltnetzteil bedingen.

### Darstellung der Erfindung

Der Erfindung liegt daher die Aufgabe zugrunde, ein Verfahren zur Steuerung eines Schaltnetzteils der eingangs angeführten Art anzugeben, durch welches auf kostengünstige und einfache Weise eine Überwachung eines Betriebszustandes sowie eine entsprechende Steuerung des Schaltnetzteils ermöglicht wird, und wobei ohne zusätzlichen Aufwand für eine stabile Energieversorgung von primär- und sekundärseitigen Funktionseinheiten des Schaltnetzteils gesorgt wird.

Diese Aufgabe wird durch ein Verfahren zur Steuerung eines Schaltnetzteils der eingangs angegebenen Art mit den Merkmalen des unabhängigen Patentanspruchs gelöst. Vorteilhafte Ausführungsformen der vorliegenden Erfindung sind in den abhängigen Ansprüchen beschrieben.

Erfindungsgemäß erfolgt die Lösung der Aufgabe durch Verfahren zur Steuerung eines Schaltnetzteils, bei welchem Energie und Signale, insbesondere Steuersignale bzw. -impulse zwischen einer Primärseite und einer Sekundärseite des Schaltnetzteils übertragen werden. Das Schaltnetzteil umfasst dabei zumindest einen Leistungswandler mit zumindest einem primärseitigen Schaltelement, welcher eine galvanische Trennung, insbesondere einen Transformator, aufweist. Zusätzlich zur galvanischen Trennung im Leistungsteil des Schaltnetzteils werden die Primärseite und die Sekundärseite des Schaltnetzteils durch einen bidirektionalen Übertrager getrennt. Von einer primärseitigen Steuereinheit werden - insbesondere in einer Hochlaufphase des Schaltnetzteils - in regelmäßigen, vorgegebenen Zeitabständen Einschaltimpulse generiert und über den bidirektionalen Übertrager auf die Sekundärseite des Schaltnetzteils übertragen. Mit Hilfe dieser Einschaltimpulse wird auf der Sekundärseite eine Spannung einer sekundärseitigen Hilfsversorgung, über welche zumindest eine sekundärseitige Steuereinheit mit Energie versorgt wird, aufgebaut. Bei Überschreiten eines vorgegebenen Spannungsschwellwerts durch die Spannung der sekundärseitigen Hilfsversorgung werden von der sekundärseitigen Steuereinheit Steuerimpulse abgesetzt und über den bidirektionalen Übertrager auf die Primärseite übertragen. Auf der Primärseite werden diese Steuerimpulse von der primärseitigen Steuereinheit ausgewertet und dann als Basis für Ansteuersignale insbesondere zum Schalten des zumindest einen primärseitigen Schaltelements des Leistungswandlers herangezogen.

Der Hauptaspekt der gegenständlichen Erfindung besteht darin, dass ein bidirektionaler Übertrager je nach Betriebszustand des Schaltnetzteils für eine Energieübertragung, für eine Signalübertragung oder für Energie- und Signalübertragung zwischen der Primärseite und der Sekundärseite des Schaltnetzteils eingesetzt wird. In einer Hochlaufphase wird der bidirektionale Übertrager für die Energieübertragung verwendet, wobei die Energie in Form von Einschaltimpulsen von der Primärseite auf die Sekundärseite - insbesondere zum Aufbauen einer Spannung der sekundärseitigen Hilfsversorgung - übertragen wird. Die Einschaltimpulse weisen im Vergleich zu einer Arbeitsfrequenz des Leistungswandlers bzw. des Schaltnetzteils eine deutlich niedrigere Wiederholungsrate auf und sind gleichzeitig eine Information, dass das Schaltnetzteil primärseitig bereit zum Hochfahren ist. Die Energie für die Einschaltimpulse wird idealerweise von einer primärseitigen Hilfsversorgung geliefert, welche für die Hochlaufphase beispielsweise aus der Eingangsspannung des Schaltnetzteils gespeist wird.

Ab Überschreiten eines vorgegebenen Spannungsschwellwerts durch die Spannung der sekundärseitigen Hilfsversorgung werden sekundärseitig von der sekundärseitigen Steuereinheit Steuerimpulse abgesetzt. Diese Steuerimpulse werden über den bidirektionalen Übertrager von der Sekundärseite auf die Primärseite übertragen. D.h. der bidirektionale Übertrager wird ab dem Absetzen der Steuerimpulse und für den folgenden laufenden Betrieb des Schaltnetzteils zumindest für eine Signalübertragung von der Sekundärseite auf die Primärseite verwendet. Primärseitig werden die Steuerimpulse dann ausgewertet und als Basis für Ansteuersignale - vor allem für ein Schalten des zumindest einen Schaltelements des Leistungswandlers auf der Primärseite herangezogen.

Durch die gegenständliche Erfindung kann eine Durchführung der Hochlaufphase des Schaltnetzteils nur aktiv pulsend von der Sekundärseite aus erfolgen. Dadurch ist ein gemäß der Erfindung arbeitendes Schaltnetzteil eigensicher und ermöglicht durch die eigensichere Ausgestaltung einen höheren Sicherheitsstandard. Weiterhin kann durch den Einsatz des bidirektionalen Übertragers, welcher je nach Betriebszustand des Schaltnetzteils zur Energieübertragung oder zur Signalübertragung oder für beides genutzt wird, das Schaltnetzteil weniger aufwendig bzw. mit weniger Bauteilen und kostengünstiger realisieren werden. Durch die Nutzung des bidirektionalen Übertragers für Energie- und/oder Signalübertragung kann beispielsweise auf einen Einsatz von kostspieligen Optokoppler verzichtet werden. Weiterhin kann auch auf einen Einsatz von Hilfsversorgungswandlern oder -wicklungen zur primär- und sekundärseitigen Eigenversorgung des Schaltnetzteils verzichtet werden, da eine Energieübertragung für die Versorgung der Sekundärseite bzw. der sekundärseitigen Funktionseinheiten in der Hochlaufphase beim erfindungsgemäßen Verfahren durch den bidirektionalen Übertrager übernommen wird. Im laufenden Betrieb erfolgt dann die Versorgung der sekundärseitigen Funktionseinheiten durch den Leistungsteil des Schaltnetzteils. Dadurch können der Aufwand für die Realisierung des Schaltnetzteils (z.B. Bauteile, etc.) sowie die Kosten das Schaltnetzteil weiter reduziert werden.

Insbesondere bei speziellen Schaltungslösungen für Schaltnetzteile (z.B. bei Einsatz eines Resonanzwandlers oder bei vorgegebenen Abmagnetisierungsbedingungen von Fluss- oder Sperrwandlern) können durch das erfindungsgemäße Verfahren die Schaltbedingungen für den zumindest einen primärseitigen Schaltelement wesentlich exakter ermittelt werden. Dabei wird von sekundärseitig bestimmbaren Größen wie z.B. Strom durch z.B. einen Synchrongleichrichter/Erkennen des Stromnulldurchgangs, zugehörigen Spannungsverläufen, etc. ausgegangen, wobei daraus auf der Sekundärseite beispielsweise ein Beginnzeitpunkt des jeweiligen von sekundärseitigen Steuereinheit generierten Steuerimpuls abgeleitet wird. Über den bidirektionalen Übertrager wird der jeweilige Steuerimpuls auf die Primärseite übertragen und daraus kann dann ein Zeitpunkt für das Schalten des zumindest einen primärseitigen Schaltelements mittelbar oder unmittelbar abgeleitet werden. Damit können durch das erfindungsgemäße Verfahren Schaltbedingungen z.B. aus Resonanzbedingungen des Leistungswandlers oder in Abhängigkeit von primär- wie sekundärseitigen Strom- und/oder Spannungsverläufen ermittelt und in allen Betriebspunkten ein wirksames Schaltverhalten (z.B. Zero-Voltage-Switching, Zero-Current-Switching, etc.) mit entsprechend niedrigen Schaltverlusten erzielt werden.

Alternativ oder zusätzlich, kann primärseitig aus den Steuerimpulsen der sekundärseitigen Steuereinheit auch eine Einschaltdauer des zumindest einen primärseitigen Schaltelements mittelbar oder unmittelbar abgeleitet werden. Dabei kann eine Dauer des sekundärseitig erzeugten Steuerimpulses genutzt werden, aus welcher direkt oder indirekt die Einschaltdauer für das zumindest eine primärseitige Schaltelement des Leistungswandlers abgeleitet wird. Insbesondere bei Wandlerschaltungen ohne Stromvorgabe kann z.B. die sekundärseitig erzeugten Steuerimpulse direkt zur Ansteuerung des bzw. der primärseitigen Schaltelemente herangezogen werden.

Weiterhin kann in vorteilhafter Weise aus den Steuerimpulsen der sekundärseitigen Steuereinheit primärseitig eine Information über einen einzustellenden Stromwert für das zumindest eine primärseitige Schaltelement abgeleitet werden. Eine Höhe des einzustellenden Stromwerts kann beispielsweise aus einem Tastverhältnis der zeitlichen Abfolge der sekundärseitig erzeugten Steuerimpulse (d.h. einem Verhältnis der Impulsbreite zur Länge einer Pause zwischen zwei Steuerimpulsen) abgeleitet werden. Die primärseitige Ableitung des Stromwerts aus dem Tastverhältnis der sekundärseitig generierten Steuerimpulse kann beispielsweise analog (z.B. mittels einfacher RC-Filterung, Zeitmessung, Zählereinsatz) oder digital erfolgen.

Es ist weiterhin günstig, wenn für ein Generieren der Steuerimpulse von der sekundärseitigen Steuereinheit Informationen aus einer Ausgangsspannung des Schaltnetzteils herangezogen werden (z.B. Wert der Ausgangsspannung, Wert des Ausgangsstroms, etc.). Diese Informationen können beispielsweise in die Impulsbreite der sekundärseitig generierten Steuerimpulse einfließen und damit wiederum die Schaltbedingungen für das bzw. die primärseitigen Schaltelemente beeinflussen.

Nach Absetzen von zumindest einem Steuerimpuls durch die sekundärseitige Steuereinheit bzw. mit einem Einschalten des zumindest einen primärseitigen Schaltelements wird ein Erzeugen der primärseitigen Einschaltimpulse idealerweise unterdrückt bzw. zurückgesetzt. Damit erfolgt ab der Erzeugung der Steuerimpulse durch die sekundärseitige Steuereinheit keine weitere Energieversorgung der sekundärseitigen Hilfsversorgung bzw. Funktionseinheiten von der Primärseite aus. Die Versorgung der Sekundärseite bzw. der sekundärseitigen Hilfsversorgung mit Energie wird über den Leistungswandler des Schaltnetzteils durchgeführt. D.h. die Versorgung der Sekundärseite wird durch die Nutzung des Signals des Leistungswandlers gewährleistet, wobei bereits mit einem ersten Schaltzyklus des zumindest einen primärseitigen Schaltelements Energie auf der Sekundärseite nachgeladen wird. Von der sekundärseitigen Hilfsversorgung bzw. von einem darin vorgesehenen Energiespeicher (z.B. Speicherkondensator) muss damit nur für den ersten Steuerimpuls zum Schalten bzw. den zumindest ersten Schaltzyklus des zumindest einen primärseitigen Schaltelements ausreichend Energie geliefert werden, um ein Absinken der Spannung der sekundärseitigen Hilfsversorgung unter eine vorgegebene Abschaltschwelle zu verhindern.

Eine zweckmäßige Weiterbildung der gegenständlichen Erfindung sieht vor, dass von den Steuerimpulsen der sekundärseitigen Steuereinheit Energie zur Versorgung von primärseitigen Funktionseinheiten, wie z.B. von der primärseitigen Steuereinheit, von einer Ansteuereinheit für das zumindest eine primärseitige Schaltelement, etc., zur Verfügung gestellt wird. Damit muss auch primärseitig nur für die Hochlaufphase des Schaltnetzteils - vor allem das Erzeugen der Einschaltimpulse durch die primärseitige Steuereinheit und die Versorgung der Sekundärseite während des Hochlaufens - genügend Energie verfügbar sein bzw. für einen Standby-Zustand, wenn das Schaltnetzteil sekundärseitig abgeschaltet wird. Eine Speisung der primärseitigen Hilfsversorgung aus der Eingangsspannung des Schaltnetzteils kann daher relativ einfach ausgestaltet sein und die Verluste, welche von einer primärseitigen Hilfsversorgung erzeugt werden, können damit sehr einfach reduziert bzw. gering gehalten werden. Im laufenden Betrieb des Schaltnetzteils erfolgt die Versorgung der Primärseite von der Sekundärseite aus durch eine so genannte Zurück-Versorgung, wodurch eine Verbesserung im Wirkungsgrad erreicht wird.

Weiterhin ist es vorteilhaft, wenn für die Ansteuerung des bidirektionalen Übertragers sowohl primärseitig als auch sekundärseitig bzw. bei der primärseitigen Steuereinheit und bei der sekundärseitigen Steuereinheit so genannte Open-Kollektor-Schaltelemente oder so genannte Open-Drain-Schaltelemente eingesetzt werden. Open-Kollektor-Schaltelemente bzw. Open-Drain-Schaltelemente sind Schaltelemente wie z.B. Transitoren, welche einen so genannten Open-Kollektor- bzw. Open-Drain-Anschluss aufweisen. Dabei ist dieser Kollektor- bzw. Drain-Anschluss unbeschaltet bzw. offen gelassen. Durch den Einsatz derartiger Schaltelemente wird verhindert, dass die über den bidirektionalen Übertrager übertragenen Signale wechselweise kurzgeschlossen werden.

Wird das Schaltnetzteil von der Sekundärseite aus abgeschaltet (z.B. bei Überlast) bzw. in einen Standby-Zustand versetzt, so wird die Erzeugung von Steuerimpulsen durch die sekundärseitige Steuereinheit beendet. Dadurch wird auch primärseitig die Ansteuerung des zumindest einen primärseitigen Schaltelements eingestellt. Die Versorgung kann dann wieder durch die Primärseite bzw. durch die primärseitig erzeugten Einschaltimpulse erfolgen, welche aufgrund fehlender Steuerimpulse von der Sekundärseite nicht mehr unterdrückt werden.

Bei einer primärseitigen Unterspannung oder bei anderen primärseitig auftretenden Störungen des Schaltnetzteils kann ebenfalls eingegriffen werden und das Schaltnetzteil primärseitig abgeschaltet werden. Für ein primärseitiges Abschalten des Schaltnetzteils wird auf einfache Weise ein Einschalten des zumindest einen primärseitigen Schaltelements durch die primärseitige Steuereinheit und/oder die Ansteuereinheit für das zumindest einen primärseitige Schaltelement unterdrückt. Die Sekundärseite wird dann nicht mehr über den Leistungswandler mit Energie versorgt, wodurch die sekundärseitige Hilfsspannung unter eine vorgegebene Abschaltschwelle sinkt. Von der sekundärseitigen Steuereinheit werden dann keine Steuerimpuls mehr generiert und das Schaltnetzteil damit abgeschaltet.

### Kurzbeschreibung der Zeichnung

Die Erfindung wird nachfolgend in beispielhafter Weise anhand der beigefügten Figuren erläutert. Es zeigen dabei:
- Figur 1: schematisch einen beispielhaften Ablauf des erfindungsgemäßen Verfahrens zur Steuerung eines Schaltnetzteils
- Figur 2: beispielhaft einen zeitlichen Verlauf von Signalen in einer Hochlaufphase des Schaltnetzteils nach dem erfindungsgemäßen Verfahren
- Figur 3: beispielhaft eine zeitlichen Verlauf von Signalen während eines laufenden Betriebs des Schaltnetzteils nach dem erfindungsgemäßen Verfahren
- Figur 4: beispielhaft einen Ablauf bei einem sekundärseitig ausgelösten Abschaltvorgang nach dem erfindungsgemäßen Verfahren
- Figur 5: beispielhaft einen zeitlichen Ablauf bei einem primärseitig ausgelösten Abschaltvorgang nach dem erfindungsgemäßen Verfahren

### Ausführung der Erfindung

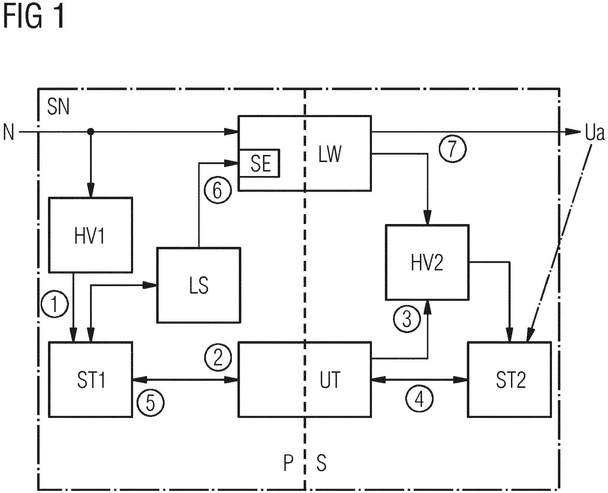

In Figur 1 ist schematisch ein beispielhaftes Schaltnetzteil SN dargestellt. Das Schaltnetzteil SN umfasst einen Leistungswandler LW, durch welchen eine galvanische Trennung (z.B. über einen Transformator) zwischen einer Primärseite P und einer Sekundärseite S des Schaltnetzteils SN hergestellt wird. Der Leistungswandler LW kann beispielsweise als Flusswandler, Sperrwandler oder Resonanzwandler ausgeführt sein. Auf der Primärseite P des Schaltnetzteils SN befindet sich üblicherweise einen Anbindung an eine Stromquelle oder ein Stromnetz, von welchem eine Netzspannung N als Eingangsspannung für das Schaltnetzteil SN geliefert wird. An der Sekundärseite S des Schaltnetzteils SN wird eine Ausgangsspannung Ua zum Anschließen einer Last bzw. eines Verbrauchers zur Verfügung gestellt wird. Zwischen der Primärseite P und der Sekundärseite S des Schaltnetzteils SN werden Energie und Signale, insbesondere Steuerimpulse für ein Schalten des Leistungswandlers LW, übertragen.

Für ein entsprechendes Schalten weist der Leistungswandler LW primärseitig zumindest ein Schaltelement SE (z.B. Feldeffekttransistor (MOSFET), Bipolartransistoren (BJT), etc.) auf, welches über eine Ansteuereinheit LS, welche auf der Primärseite P des Schaltnetzteils SN angeordnet ist, nach vorgegebenen Schaltbedingungen angesteuert bzw. ein- und ausgeschaltet wird. Derartige Schaltbedingungen können beispielsweise durch die Ausgangsspannung Ua beeinflusst und/oder insbesondere bei speziellen Wandlerkonzepten beispielsweise aus Resonanzbedingungen (z.B. Nulldurchgangs des Stromes oder der Spannung auf der Sekundärseite S) abgeleitet werden.

Die Primärseite P des Schaltnetzteils SN weist weiterhin eine primärseitige Steuereinheit ST1 auf, von welcher Steuerimpulse der Sekundärseite S ausgewertet werden. Weiterhin werden von der primärseitigen Steuereinheit ST1 Vorgaben für die Ansteuerung bzw. für die Schaltbedingungen der Ansteuereinheit LS und damit für das zumindest eine primärseitige Schaltnetzelement SE aus den von der Sekundärseite S gelieferten Steuerimpulsen abgeleitet (wie z.B. Vorgaben für eine Pulsweitenmodulation, Vorgaben für einen Einschaltzeitpunkt, etc.). Weiterhin können von der primärseitigen Steuereinheit ST1 Signale, insbesondere Einschaltimpulse, erzeugt werden, welche auf die Sekundärseite S übertragbar sind. Die primärseitige Steuereinheit ST1 wird von einer primärseitigen Hilfsversorgung HV1, welche vor allem in einer Hochlaufphase des Schaltnetzteils SN aktiv ist, mit Energie versorgt. Weiterhin können auch weitere primärseitige Funktionseinheiten wie z.B. die Ansteuereinheit LS vor allem in der Hochlaufphase von der primärseitigen Hilfsversorgung HV1 versorgt werden.

Auf der Sekundärseite S des Schaltnetzteils SN sind zumindest eine sekundärseitige Steuereinheit ST2 sowie eine sekundärseitige Hilfsversorgung HV2 vorgesehen, wobei die sekundärseitigen Hilfsversorgung HV2 zumindest für die Versorgung der sekundärseitigen Steuereinheit ST2 eingesetzt wird. Von der sekundärseitigen Steuereinheit ST2 werden vor allem in einem laufenden Betrieb des Schaltnetzteils SN Steuerimpulse generiert und an die Primärseite P des Schaltnetzteils übertragen. Die Steuerimpulse können von der sekundärseitigen Steuereinheit ST2 analog oder digital erzeugt werden. Für eine digitale Erzeugung der Steuerimpulse kann als sekundärseitige Steuereinheit ST2 beispielsweise ein Mikrocomputer eingesetzt werden. Die Steuerimpulse können beispielsweise mit einer festen Periodendauer aufweisen oder ein Beginnzeitpunkt der Steuerimpulse kann bei speziellen Wandlerkonzepten z.B. aus Resonanzbedingungen des Leistungswandlers LW abgeleitet werden. Weiterhin können beim Generieren der Steuerimpulse von der sekundärseitigen Steuereinheit ST2 Informationen aus der Ausgangsspannung Ua des Schaltnetzteils SN wie z.B. ein Wert der Ausgangsspannung Ua, ein Wert eines Ausgangsstroms, Nulldurchgang von Strom oder Spannung auf der Sekundärseite S, etc. berücksichtigt werden. Bei der sekundärseitigen Steuereinheit ST2 werden idealerweise wie auch bei der primärseitigen Steuereinheit ST1 so genannte Open-Kollektor-Schaltelemente oder so genannte Open-Drain-Schaltelemente verwendet.

Das Schaltnetzteil SN weist auch einen bidirektionalen Übertrager UT auf, welcher beispielsweise als bidirektionaler Kleinsignal-Übertrager ausgeführt sein kann. Durch den bidirektionalen Übertrager UT wird die Primärseite P und die Sekundärseite S des Schaltnetzteils zusätzlich getrennt. Über den bidirektionalen Übertrager UT werden je nach Betriebszustand des Schaltnetzteils SN (z.B. Hochlaufphase, laufender Betrieb, primärseitiges oder sekundärseitiges Abschalten, Standby-Zustand) Energie und/oder Signale, insbesondere Steuerimpulse, zwischen der Primärseite P und der Sekundärseite S gemäß dem erfindungsgemäßen Verfahren übertragen.

In der Hochlaufphase des Schaltnetzteils SN wird in einem ersten Verfahrensschritt 1 von der primärseitigen Hilfsversorgung HV1 Energie für die primärseitige Steuereinheit ST1 geliefert. Die Speisung der primärseitigen Hilfsversorgung HV1 erfolgt aus der Eingangsspannung des Schaltnetzteils SN. Mit Hilfe dieser Energie werden im ersten Verfahrensschritt 1 von der primärseitigen Steuereinheit ST1 z.B. mit Hilfe eines Oszillators in regelmäßigen, vorgegebenen Zeitabständen Einschaltimpulse generiert. Dabei wird als Wiederholungrate der Einschaltimpulse eine im Vergleich zu einer Arbeitsfrequenz bzw. einer Wiederholungsrate von Schaltimpulsen des zumindest einen Schaltelements SE eine deutlich niedrigere Wiederholungsrate vorgegeben.

In einem zweiten Verfahrensschritt 2 werden die Einschaltimpulse von der Primärseite P über den bidirektionalen Übertrager UT auf die Sekundärseite S übertragen. Damit wird der Sekundärseite S signalisiert, dass die Primärseite P des Schaltnetzteils SN bereit zum Hochfahren ist. Auf der Sekundärseite S wird mit Hilfe der Einschaltimpulse in einem dritten Verfahrensschritt 3 eine Spannung der sekundärseitigen Hilfsversorgung HV2 aufgebaut. Durch die kurzen Einschaltimpulse kann beispielsweise ein zur sekundärseitigen Hilfsversorgung HV2 gehörender Energiespeicher (z.B. Speicherkondensator, Elektrolyt-Kondensator, etc.) aufgeladen werden. Der bidirektionale Übertrager UT wird in dieser Phase hauptsächlich zur Energieübertragung eingesetzt.

Wird von der Spannung der sekundärseitigen Hilfsversorgung HV2 ein vorgegebener Spannungsschwellwert Us überschritten, so kann die sekundärseitige Hilfsversorgung HV2 bzw. der zugehörige Energiespeicher zumindest genügend Energie für eine Versorgung der sekundärseitigen Steuereinheit ST2 liefern. In einem vierten Verfahrensschritt 4 wird dann von der sekundärseitigen Steuereinheit ST2 ein erster Steuerimpuls bzw. Steuerimpulse abgesetzt und über den bidirektionalen Übertrager UT auf die Primärseite P übertragen.

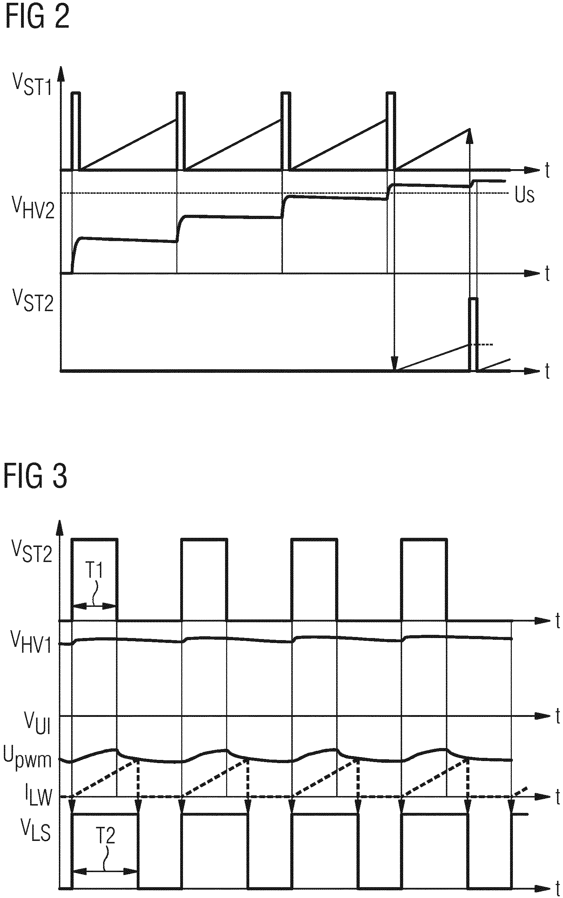

Figur 2 zeigt dazu beispielhaft entsprechende zeitliche Verläufe V_{ST1}, V_{HV2} und V_{ST2} von Signalen und Spannungen in der Hochlaufphase des Schaltnetzteils SN. Dabei ist in einem Verlauf V_{ST1} ein zeitlicher Verlauf V_{ST1} des von der primärseitigen Steuereinheit ST1 in regelmäßigen Zeitabständen generierten Einschaltimpulses dargestellt. Ein zeitlicher Verlauf V_{HV2} der Figur 2 zeigt einen Spannungsverlauf V_{HV2} der sekundärseitigen Hilfsversorgung HV2. Daraus ist ersichtlich, dass mit jedem Einschaltimpuls der primärseitigen Steuereinheit ST1 die Spannung der sekundärseitigen Hilfsversorgung HV2 weiter aufgebaut wird, bis der Schwellspannungswert Us von der Spannung der sekundärseitigen Hilfsversorgung HV2 überschritten wird. Ein zeitlicher Verlauf V_{ST2} zeigt einen Signalverlauf V_{ST2} der sekundärseitigen Steuereinheit ST2. Ab Überschreiten des Spannungsschwellwerts Us durch die Spannung der sekundärseitigen Hilfsversorgung HV2 wird von der zweiten Steuereinheit ST2 z.B. mit Hilfe eines Oszillators ein Steuerimpuls aufgebaut und abgesetzt.

Dieser Steuerimpuls bzw. die weiteren Steuerimpulse der sekundärseitigen Steuereinheit ST2 werden dann in einem fünften Verfahrensschritt 5 primärseitig von der primärseitigen Steuereinheit ST1 ausgewertet. Mit dem Absetzen des ersten Steuerimpulses bzw. von Steuerimpulsen der sekundärseitigen Steuereinheit ST2 wird das Erzeugen von Einschaltimpulsen von der primärseitigen Steuereinheit ST1 eingestellt bzw. unterdrückt. In der Folge werden die Steuerimpulse der sekundärseitigen Steuereinheit ST2 primärseitig als Basis bzw. Vorgabe für von der Ansteuereinheit LS erzeugte Ansteuersignale herangezogen. Durch die Ansteuersignale wird in einem sechsten Verfahrensschritt 6 das zumindest eine primärseitige Schaltelement SE des Leistungswandlers LW angesteuert bzw. geschaltet. D.h., dass beispielsweise von einer steigenden Flanke eines Steuerimpulses der sekundärseitigen Steuereinheit ST2 ein Einschalten des zumindest einen primärseitigen Schaltelements SE des Leistungswandlers LW initiiert wird.

Durch ein Schalten des zumindest eine primärseitigen Schaltelements SE werden in einem siebenten Verfahrensschritt 7 über den Leistungswandler LW Energie und Signale von der Primärseite P auf die Sekundärseite S übertragen. Vom Schaltnetzteil SN wird auf der Sekundärseite S die Ausgangsspannung Ua zur Verfügung gestellt. Ab der Ansteuerung des zumindest einen primärseitigen Schaltelements SE werden die sekundärseitigen Hilfsversorgung HV2 und damit indirekt auch die sekundärseitige Steuereinheit ST2 über den Leistungswandler LW mit Energie versorgt. Von der sekundärseitigen Steuereinheit ST2 werden die Steuerimpulse für die Primärseite P des Schaltnetzteils SN auf Basis von Informationen aus der Ausgangsspannung (z.B. Spannungswert, Ausgangsstrom, Nulldurchgänge von Strom oder Spannung, etc.) generiert und auf die Primärseite P übertragen.

Auf der Primärseite P werden die Steuerimpulse der sekundärseitigen Steuereinheit ST2 von der primärseitigen Steuereinheit ST1 ausgewertet und daraus Informationen und/oder Vorgaben für die Schaltbedingungen des zumindest einen primärseitigen Schaltelements SE mittelbar oder unmittelbar abgeleitet. Aus den Steuerimpulsen können beispielsweise ein Zeitpunkt für das Schalten des zumindest einen primärseitigen Schaltelements SE und/oder eine Einschaltdauer des zumindest einen primärseitigen Schaltelements SE und/oder eine Information über einen einzustellenden Stromwert für das zumindest einen primärseitigen Schaltelements SE mittelbar oder unmittelbar abgeleitet werden. D.h. von der Sekundärseite S des Schaltnetzteils SN wird über die Steuerimpulse der sekundärseitigen Steuereinheit ST2 die Basis für primärseitige Regeleingriffe, insbesondere für das Schalten des zumindest einen primärseitigen Schaltelements SE, geliefert. Eine Ansteuerung des Schaltnetzteils erfolgt damit von der Sekundärseite S.

Zusätzlich werden die Steuerimpulse der sekundärseitigen Steuereinheit ST2 zur Versorgung der Primärseite - z.B. zur Versorgung der primärseitigen Steuereinheit ST1, der Ansteuereinheit LS, etc. - genutzt. Das bedeutet, dass primärseitig nur genügend Energie für das Hochfahren der primärseitigen Steuereinheit ST1, für die Einschaltimpulse und damit für das Hochfahren der Sekundärseite S zur Verfügung gestellt werden muss. Im laufenden Betrieb erfolgt die Versorgung der Primärseite P über die Sekundärseite S, insbesondere über die Steuerimpulse der sekundärseitigen Steuereinheit ST2.

Figur 3 zeigt dazu beispielhaft entsprechende zeitliche Verläufe V_{ST2}, V_{HV1}, V_{UI} und V_{LS} von Signalen, Spannungen und Strömen während eines laufenden Betriebs des Schaltnetzteils SN. In einem Verlauf V_{ST2} der Figur 3 ist ein zeitlicher Verlauf V_{ST2} der von der sekundärseitigen Steuereinheit ST2 erzeugten Steuerimpulse dargestellt, wobei die Steuerimpulse beispielsweise eine feste Periodendauer aufweisen. Durch eine Impulsbreite T1 des jeweiligen Steuerimpulses kann beispielsweise mittelbar oder unmittelbar eine Einschaltzeit T2 des zumindest einen Schaltelements SE des Leistungswandler LS oder ein Einschaltzeitpunkt für das zumindest eine Schaltelements SE vorgegeben werden. Durch die Steuerimpulse der sekundärseitigen Steuereinheit ST2 wird weiterhin die Versorgung der Primärseite P mit Energie bzw. Spannung durchgeführt, deren zeitlicher Verlauf V_{HV1} in einem Verlauf V_{HV1} der Figur 3 dargestellt ist. Der Verlauf V_{HV1} zeigt dabei, dass die Versorgung der Primärseite P durch die Steuerimpulse z.B. annähernd konstant gehalten wird.

Ein Verlauf V_{UI} der Figur 3 zeigt den zeitlichen Verlauf einer primärseitigen Steuerspannung U_{pwm}, welche z.B. von der primärseitigen Steuereinheit ST1 aus den Steuerimpulsen abgeleitet wird, und welche beispielsweise als Vorgabe für die Ansteuereinheit LS eingesetzt werden kann. Weiterhin zeigt der Verlauf V_{UI} der Figur 3 beispielhaft einen zeitlichen Verlauf eines primärseitigen Stroms I_{LW} am Leistungswandler LW, durch welchen z.B. die Einschaltdauer T2 des zumindest einen primärseitigen Schaltelements SE vorgegeben werden kann. In einem Verlauf V_{LS} der Figur 3 ist dazu beispielhaft ein zeitlicher Verlauf V_{LS} des Ansteuersignals der Ansteuereinheit LS für die Schaltvorgängen des zumindest einen primärseitigen Schaltelements SE dargestellt. Die Einschaltdauer T2 des primärseitigen Schaltelements SE wird dabei z.B. durch einen einzustellenden Stromwert des Stromes I_{LW} vorgegeben, welcher durch das zumindest eine primärseitige Schaltelement SE fließt.

Wie in Figur 3 beispielshaft dargestellt, wird mit einer steigenden Flanke eines Steuerimpulses der sekundärseitigen Steuereinheit ST2 eine steigende Flanke eines Ansteuersignals V_{LS} und dadurch ein Einschalten des zumindest einen primärseitigen Schaltelements SE initiiert. Gleichzeitig wird aus einem Tastverhältnis der Steuerimpulse der sekundärseitigen Steuereinheit ST2 eine Information über die Höhe des einzustellenden Stromes I_{LW} durch das zumindest eine primärseitige Schaltelement SE abgeleitet. Diese Information bildet eine Basis für das für eine Regelung der Primärseite P notwendige Ansteuersignal. Die Information bzw. das Ansteuersignal kann beispielsweise als Analogwert durch eine einfache RC-Filterung aus dem Tastverhältnis der Steuerimpulse z.B. in der primärseitigen Steuereinheit ST1 zurückgewonnen werden. Alternativ ist auch eine digitale Ableitung aus den Steuerimpulsen möglich.

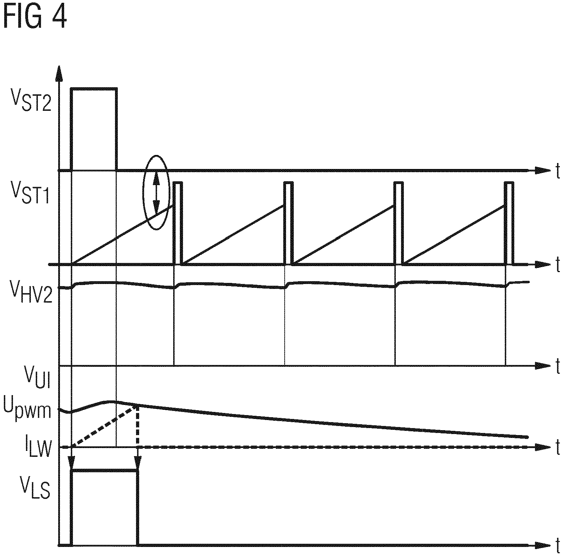

Ein Abschaltvorgang des Schaltnetzteils SN kann beispielsweise von der Sekundärseite S des Schaltnetzteils aus erfolgen - z.B. bei einer Überlast oder für einen Standby-Zustand durch so genannte Fernabschaltung. Ein beispielhafter Ablauf bzw. entsprechende Verläufe V_{ST2}, V_{ST1}, V_{HV2}, V_{UI} und V_{LS} von Signalen, Spannung U_{pwm} und Strom I_{LW} im Schaltnetzteil SN sind in Figur 4 dargestellt. Ein Verlauf V_{ST2} der Figur 4 zeigt dabei einen zeitlichen Verlauf V_{ST2} der Steuerimpulse der sekundärseitigen Steuereinheit ST2. Für das sekundärseitige Abschalten des Schaltnetzteils SN wird das Erzeugen von Steuerimpulsen durch die sekundärseitige Steuereinheit ST2 beendet bzw. unterdrückt. Wie in einem Verlauf V_{ST1} der Figur 4 dargestellt, werden primärseitig von der primärseitigen Steuereinheit ST1 wieder Einschaltimpulse generiert. Durch den fehlenden, sekundärseitigen Steuerimpuls werden diese nicht mehr unterdrückt und können die Spannung der sekundären Hilfsversorgung HV2 - wie in einem Verlauf V_{HV2} der Figur 4 dargestellt - auf einem annähernd konstanten Energie- bzw. Spannungsniveau halten, damit beispielsweise sekundärseitig eine entsprechende Versorgung der Steuereinheit ST2 für z.B. ein Ferneinschalten, etc. zur Verfügung steht.

In einem Verlauf V_{UI} der Figur 4 ist wieder ein zeitlicher Verlauf der primärseitigen Steuerspannung U_{pwm}, welche z.B. von der primärseitigen Steuereinheit ST1 aus den Steuerimpulsen abgeleitet wird, dargestellt. Weiterhin zeigt der Verlauf V_{UI} der Figur 4 beispielhaft einen zeitlichen Verlauf eines primärseitigen Stroms I_{LW} am Leistungswandler LW. Durch die fehlenden sekundärseitigen Steuerimpulse sinkt die primärseitige Steuerspannung U_{pwm} ab und der Strom I_{LW} geht auf den Wert 0. Es werden damit keine Ansteuersignale mehr für das zumindest eine primärseitige Schaltelement SE generiert. D.h. das zumindest eine primärseitige Schaltelement SE bleibt ausgeschaltet und es werden keine Energie bzw. keine Signale mehr über den Leistungswandler LW auf die Sekundärseite S übertragen. Eine Energieübertragung zur Aufrechterhaltung der sekundären Hilfsversorgung HV2 erfolgt mittels der Einschaltimpulse der primärseitigen Steuereinheit ST1 über den bidirektionalen Übertrager UT.

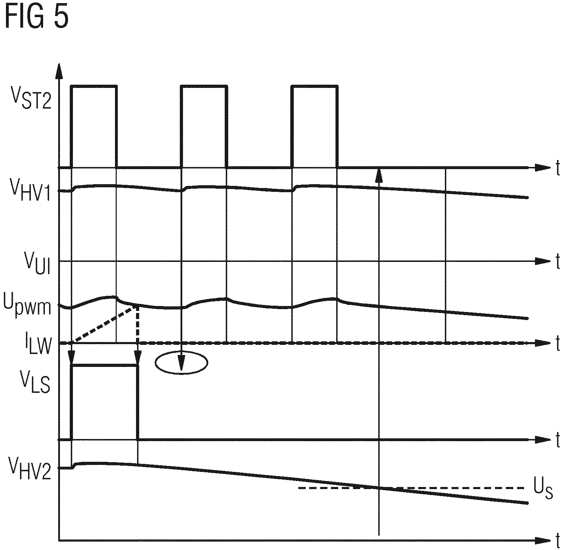

Alternativ oder zusätzlich kann auch auf der Primärseite P - beispielsweise bei zu geringer Netzspannung N oder einem primärseitigen Spannungsabfall bzw. einer primärseitigen Unterspannung eingegriffen werden und das Schaltnetzteil SN von der Primärseite P aus abgeschaltet werden. Figur 5 stellt dazu einen beispielhaften Ablauf des primärseitigen Abschaltvorganges bzw. der Verläufe V_{ST2}, V_{HV1}, V_{UI}, V_{LS} und V_{HV2} von Signalen, Spannung U_{pwm} und Strom I_{LW} im Schaltnetzteil SN dar. Für ein primärseitiges Abschalten des Schaltnetzteils SN werden die Ansteuersignale der Ansteuereinheit LS und damit eine Einschalten des zumindest einen primärseitigen Schaltelements SE z.B. durch die primärseitige Steuereinheit ST1 und/oder durch die Ansteuereinheit LS unterdrückt - wie im zeitlichen Verlauf V_{LS} der Ansteuersignale der Figur 5 dargestellt.

Um bei primärseitiger Abschaltung eine Anzeige der Abschaltung auf der Sekundärseite S zu ermöglichen, können auch weiterhin, allerdings auf einem geringeren Spannungsniveau befindliche, Schaltimpulse durch die primärseitige Steuereinheit ST1 erzeugt werden. Diese Schaltimpulse führen zwar nicht zum Erreichen der Einschaltspannung sekundärseitig, ermöglichen aber eine Versorgung der sekundärseitigen Steuereinheit ST2 und eine Anzeige der Abschaltung sowie eventuell auch eine Indikation der Ursache (z.B. Netzunterspannung, zu hohe Netzoberwellen, Phasenausfall, etc.) für die primärseitige Abschaltung. Diese Information kann z.B. über unterschiedlich breite Steuerpulse (Tastverhältnis) übertragen werden. Speziell bei Nutzung von digitalen Kommunikationsschnittstellen zu weiteren Steuergeräten, PCs, etc. über die Sekundärseite S kann eine derartige Funktionalität interessant sein.

Durch die fehlenden Ansteuersignale wird das zumindest eine primärseitige Schaltelement SE nicht mehr geschaltet bzw. es bleibt ausgeschaltet. Über den Leistungswandler LW wird keine Energie mehr auf die Sekundärseite S übertragen, wodurch die Spannung der sekundärseitigen Hilfsversorgung HV2 - wie im zeitlichen Verlauf V_{HV2} dargestellt - unter den Schwellspannungswert Us sinkt. Ist die Spannung der sekundärseitigen Hilfsversorgung HV2 geringer als der Schwellspannungswert Us, so werden von der sekundärseitigen Steuereinheit ST2 keine Steuerimpulse mehr generiert. Dies ist im zeitlichen Verlauf V_{ST2} der Steuerimpulse der sekundärseitigen Steuereinheit ST2 dargestellt. Damit sinkt auch die Versorgung HV1 der Primärseite P langsam ab, da von der Sekundärseite S keine Steuerimpulse und damit keine Energie mehr geliefert wird - wie im entsprechenden, zeitlichen Verlauf V_{HV1} beispielshaft dargestellt.

In einem Verlauf V_{UI} der Figur 5 ist wieder ein zeitlicher Verlauf der primärseitigen Steuerspannung U_{pwm}, welche z.B. von der primärseitigen Steuereinheit ST1 aus den Steuerimpulsen abgeleitet wird, dargestellt. Die primärseitige Steuerspannung U_{pwm} sinkt durch die fehlenden sekundärseitigen Steuerimpulse ebenfalls ab. Weiterhin zeigt der Verlauf V_{UI} der Figur 5 wieder beispielhaft einen zeitlichen Verlauf eines primärseitigen Stroms I_{LW} am Leistungswandler LW, welche bereits mit dem Unterdrücken der Ansteuersignale den Wert 0 annimmt. Das Schaltnetzteil SN wird damit primärseitig abgeschaltet und muss für einen neuerlichen Betrieb wieder entsprechend dem erfindungsgemäßen Verfahren hochgefahren werden.

## Patentansprüche

1. Verfahren zur Steuerung eines Schaltnetzteils (SN), bei welchem Energie und Signale zwischen einer Primärseite (P) und einer Sekundärseite (S) des Schaltnetzteils (SN) übertragen werden, und wobei das Schaltnetzteil (SN) zumindest einen Leistungswandler (LW) mit zumindest einem primärseitigen Schaltelement (SE) umfasst, ***dadurch gekennzeichnet, dass*** die Primärseite (P) und die Sekundärseite (S) durch einen bidirektionalen Übertrager (UT) getrennt werden, dass von einer primärseitigen Steuereinheit (ST1) in regelmäßigen, vorgegebenen Zeitabständen Einschaltimpulse generiert (1) und über den bidirektionalen Übertrager (UT) auf die Sekundärseite (S) übertragen werden (2), dass mit Hilfe der Einschaltimpulse eine Spannung einer sekundärseitigen Hilfsversorgung (HV2) aufgebaut wird (3), dass bei Überschreiten eines vorgegebenen Spannungsschwellwertes (Us) durch die Spannung der sekundärseitigen Hilfsversorgung (HV2) von einer sekundärseitigen Steuereinheit (ST2) Steuerimpulse abgesetzt werden (4), und dass diese Steuerimpulse primärseitig von der primärseitigen Steuereinheit (ST1) ausgewertet (5) und auf der Primärseite (P) als Basis für Ansteuersignale insbesondere für ein Schalten des zumindest einen primärseitigen Schaltelements (SE) herangezogen werden (6).

2. Verfahren nach Anspruch 1, ***dadurch gekennzeichnet, dass*** Energie für die Einschaltimpulse von einer primärseitigen Hilfsversorgung (HV1) geliefert wird (1).

3. Verfahren nach einem der Ansprüche 1 bis 2, ***dadurch gekennzeichnet, dass*** primärseitig aus den Steuerimpulsen der sekundärseitigen Steuereinheit (ST2) ein Zeitpunkt für das Schalten des zumindest einen primärseitigen Schaltelements und/oder eine Einschaltdauer des zumindest einen primärseitigen Schaltelements (SE) mittelbar oder unmittelbar abgeleitet wird (5).

4. Verfahren nach einem der Ansprüche 1 bis 3, ***dadurch gekennzeichnet, dass*** aus den Steuerimpulsen der sekundärseitigen Steuereinheit (ST2) primärseitig eine Information über einen einzustellenden Stromwert für das zumindest eine primärseitige Schaltelement (SE) abgeleitet wird (5).

5. Verfahren nach einem der Ansprüche 1 bis 4, ***dadurch gekennzeichnet, dass*** für ein Generieren der Steuerimpulse von der sekundärseitigen Steuereinheit (ST2) Informationen aus einer Ausgangsspannung (Ua) des Schaltnetzteils (SN) herangezogen werden (7).

6. Verfahren nach einem der Ansprüche 1 bis 5, ***dadurch gekennzeichnet, dass*** mit Absetzen eines Steuerimpulses durch die sekundärseitige Steuereinheit (ST2) ein Erzeugen der primärseitigen Einschaltimpulse unterdrückt wird (5).

7. Verfahren nach einem der Ansprüche 1 bis 6, ***dadurch gekennzeichnet, dass*** ab Ansteuerung des zumindest einen primärseitigen Schaltelements eine Versorgung der sekundären Hilfsversorgung (HV2) mit Energie über den Leistungswandler (LW) des Schaltnetzteils (SN) durchgeführt wird (7).

8. Verfahren nach einem der Ansprüche 1 bis 7, ***dadurch gekennzeichnet, dass*** von den Steuerimpulsen der sekundärseitigen Steuereinheit (ST2) Energie zur Versorgung von primärseitigen Funktionseinheiten, insbesondere der primärseitigen Steuereinheit (ST1) und eine Ansteuereinheit (LS) für das zumindest eine primärseitige Schaltelement (SE), zur Verfügung gestellt wird (7).

9. Verfahren nach einem der Ansprüche 1 bis 8, ***dadurch gekennzeichnet, dass*** bei der primärseitigen Steuereinheit (ST1) und bei der sekundärseitigen Steuereinheit (ST2) so genannte Open-Kollektor-Schaltelemente oder so genannte Open-Source-Schaltelemente verwendet werden.

10. Verfahren nach einem der Ansprüche 1 bis 9, ***dadurch gekennzeichnet, dass*** bei Abschalten des Schaltnetzteils (SN) auf der Sekundärseite (S) das Generieren von Steuerimpulsen durch die sekundärseitige Steuereinheit (ST2) beendet wird.

11. Verfahren nach einem der Ansprüche 1 bis 9, ***dadurch gekennzeichnet, dass*** für ein primärseitiges Abschalten des Schaltnetzteils (SN) ein Einschalten des zumindest einen primärseitigen Schaltelements durch die primärseitige Steuereinheit (ST1) und/oder die Ansteuereinheit (LS) für das zumindest eine primärseitige Schaltelement (SE) unterdrückt wird.
